# EUROPEAN PATENT APPLICATION

(11) **EP 4 760 982 A1**
(43) Date of publication of application: **17.06.2026**
(21) Application number: 25214606.3
(22) Date of filing: 10.11.2025
(51) Int. Cl.: H01Q 1/32, H01Q 3/24, H01Q 3/26, H04W 4/40

(54) **CONTROL DEVICE, CONTROL METHOD, AND VEHICLE**

(30) Priority: 16.12.2024 JP 2024220392
(71) Applicant: TOYOTA JIDOSHA KABUSHIKI KAISHA, Toyota-shi, Aichi-ken 471-8571 (JP)
(72) Inventor: ITO, Noriaki, Toyota-shi, Aichi-ken, 471-8571 (JP); SUGIMOTO, Shingo, Toyota-shi, Aichi-ken, 471-8571 (JP); ITO, Yuma, Toyota-shi, Aichi-ken, 471-8571 (JP)
(74) Representative: Simmons & Simmons

(57) **Abstract**

A control device (15) according to an embodiment of the present disclosure includes a control unit (153) configured to execute: acquiring a state of a vehicle (1); and controlling the directivity of an antenna (11) provided in the vehicle (1) based on the state of the vehicle (1). A control device (15) according to another embodiment of the present disclosure includes a control unit (153) configured to execute: receiving a state of a vehicle (1) from a sensor (141) configured to acquire information indicating the speed and the position of the vehicle (1); and controlling the directivity of an antenna provided in the vehicle (1) based on the state of the vehicle (1).

## Description

### BACKGROUND OF THE INVENTION

### 1. Field of the Invention

The present disclosure relates to a control device, a control method, and a vehicle.

### 2. Description of Related Art

In recent years, there has been developed a technique for vehicle-to-vehicle communication that enables communication with only a vehicle that requires information exchange by varying the width of a beam from a directional antenna mounted on the vehicle (see Japanese Unexamined Patent Application Publication No. 2009-077015 (JP 2009-077015 A), for example).

### SUMMARY OF THE INVENTION

However, other vehicles with which the vehicle communicates may be located at various locations, and there is room for improvement in controlling the directivity of an in-vehicle antenna.

The present disclosure provides a control device, a control method, and a vehicle that are capable of more appropriately controlling the directivity of an in-vehicle antenna.

An aspect of the present disclosure provides a control device including a control unit configured to execute: receiving a state of a vehicle from a sensor configured to acquire information that indicates a speed and a position of the vehicle; and controlling a directivity of an antenna provided in the vehicle based on the state of the vehicle.

An aspect of the present disclosure provides a control device including a control unit configured to execute: acquiring a state of a vehicle; and controlling a directivity of an antenna provided in the vehicle based on the state of the vehicle.

An aspect of the present disclosure provides a control method including acquiring, by a control device, a state of a vehicle; and controlling, by the control device, a directivity of an antenna provided in the vehicle based on the state.

An aspect of the present disclosure provides a vehicle including: an antenna; a detection unit configured to detect a state of the vehicle; and a control unit configured to acquire the state of the vehicle and control a directivity of the antenna based on the state of the vehicle.

The state of the vehicle may be at least one of being stationary, being stationary in a multilevel parking garage, traveling on a highway, and being charged.

The controlling the directivity of the antenna may include controlling the antenna in front and rear directions, all planar directions, or all directions.

The controlling the directivity of the antenna may include controlling the antenna in all planar directions when the state of the vehicle is being stationary.

The controlling the directivity of the antenna may include controlling the antenna in all directions when the state of the vehicle is being stationary in a multilevel parking garage.

The controlling the directivity of the antenna may include controlling the antenna in front and rear directions when the state of the vehicle is traveling on a highway.

The controlling the directivity of the antenna may include controlling the antenna in front and rear directions when the state of the vehicle is being charged.

The controlling the directivity of the antenna may include switching between a plurality of antennas with different directivities and gains.

The controlling the directivity of the antenna may include switching between the antenna for a multimedia device and the antenna for an in-vehicle communication device.

The controlling the directivity of the antenna may include controlling a phase of radio waves of a plurality of antennas.

The antenna may be a liquid metal antenna. The controlling the directivity of the antenna may include controlling at least one of a magnetic field and an amount of heat to be applied to the liquid metal antenna.

According to the present disclosure, it is possible to more appropriately control the directivity of an in-vehicle antenna.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates a schematic configuration of a communication system according to an embodiment of the present disclosure;
FIG. 2 illustrates a schematic configuration of a vehicle according to the embodiment of the present disclosure;
FIG. 3A is a schematic diagram illustrating an example of directivity of an antenna;
FIG. 3B is a schematic diagram illustrating an example of directivity of the antenna;
FIG. 3C is a schematic diagram illustrating an example of directivity of the antenna; and
FIG. 4 is a flowchart illustrating an example of operation of a control device according to the embodiment of the present disclosure.

### DETAILED DESCRIPTION OF EMBODIMENTS

An embodiment of the present disclosure will be described in detail below with reference to the drawings.

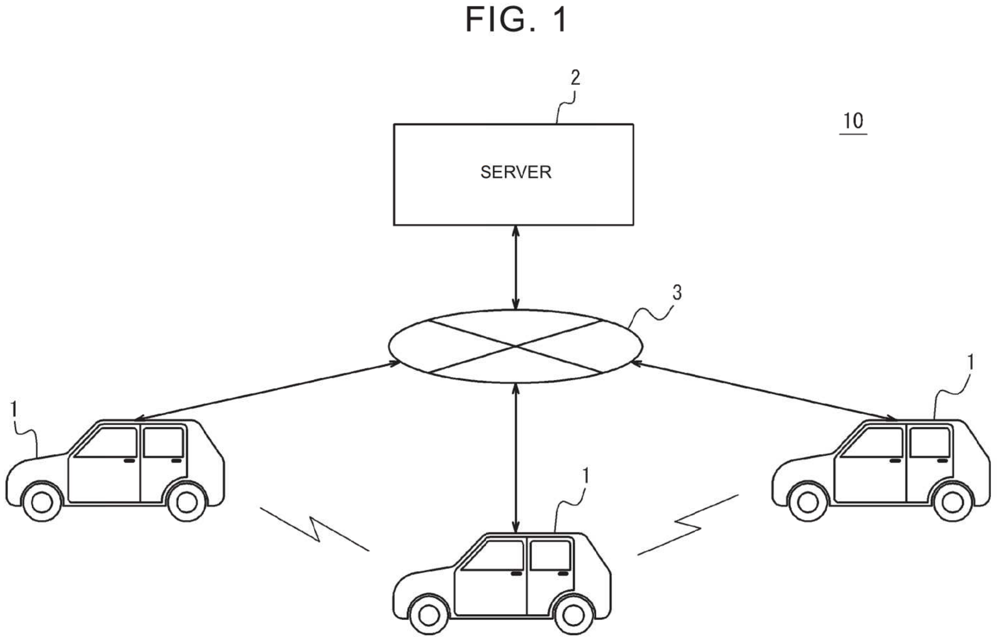

The configuration of a communication system according to an embodiment will be described with reference to FIG. 1. The communication system 10 illustrated in FIG. 1 includes a plurality of vehicles 1 and a server 2. FIG. 1 illustrates only three vehicles 1. The vehicles 1 and the server 2 are communicably connected to each other via a network 3. The network 3 includes the Internet.

The server 2 includes a communication interface for communication with the vehicles 1. The server 2 receives vehicle information that indicates the state, position, etc. of each vehicle 1 from each of the vehicles 1 via the network 3. For example, the server 2 controls vehicle-to-vehicle communication based on the vehicle information.

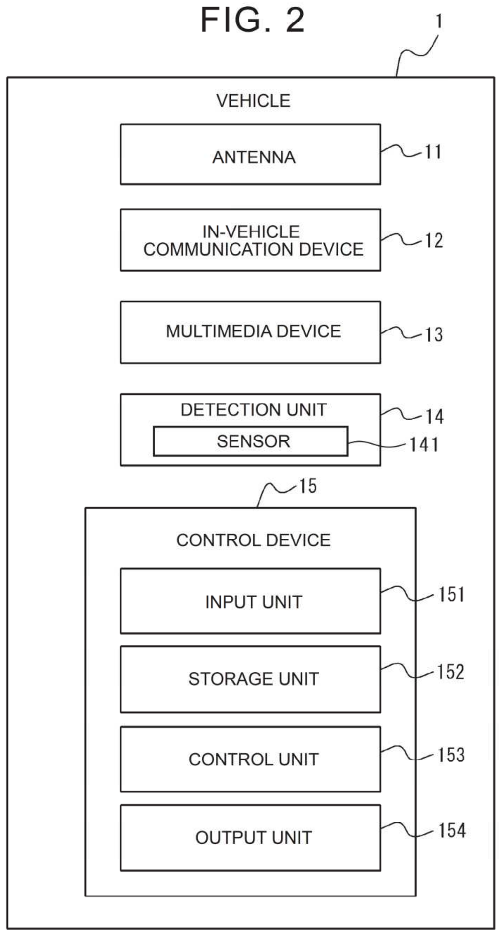

The configuration of a vehicle according to the embodiment will be described with reference to FIG. 2. A vehicle 1 illustrated in FIG. 2 includes an antenna 11, an in-vehicle communication device 12, a multimedia device 13, a detection unit 14, and a control device 15.

The antenna 11 is an in-vehicle antenna for communication with the server 2 and other vehicles 1. The directivity of the antenna 11 is controlled by the control device 15. The antenna 11 may be an antenna (e.g., an array antenna) composed of a plurality of antennas, and the antennas may have different directivities and gains. The antenna 11 may be a liquid metal antenna.

The in-vehicle communication device 12 is a communication device dedicated to vehicles, and is also called a data communication module (DCM). The in-vehicle communication device 12 is connected to the antenna 11, and communicates with the server 2 and other vehicles 1 via the antenna 11 using a first communication method (e.g., cellular communication).

The multimedia device 13 is equipped with a navigation function, an audio function such as radio, television, and traffic information, a communication function using a second communication method, and a function of linking with a smart device (e.g., a smartphone). The multimedia device 13 is connected to the antenna 11, and communicates with other vehicles 1 via the antenna 11 using the second communication method (e.g., Wi-Fi (registered trademark) communication).

The detection unit 14 includes a plurality of sensors 141, and detects the state of the vehicle 1 using each of the sensors 141. The state of the vehicle 1 includes at least one of being stationary, being stationary in a multilevel parking garage, traveling on a highway, and being charged, for example. The sensor 141 may be a speed sensor, a global positioning system (GPS) sensor, and a battery sensor, for example. The detection unit 14 detects whether the vehicle 1 is stationary using the speed sensor, for example. The detection unit 14 detects the position of the vehicle 1 using the GPS sensor, for example. The detection unit 14 detects whether the vehicle 1 is stationary in a multilevel parking garage and whether the vehicle 1 is traveling on a highway using the speed sensor and the GPS sensor, for example. The detection unit 14 detects whether a battery of the vehicle 1 is being charged using the battery sensor attached to the battery, for example.

The control device 15 includes an input unit 151 , a storage unit 152 , a control unit 153 , and an output unit 154.

The input unit 151 receives an input of the state of the vehicle 1 (a target vehicle equipped with the antenna 11 controlled by the control device 15) from the detection unit 14, and outputs the state of the vehicle 1 to the storage unit 152. For example, the input unit 151 receives the state of the vehicle 1 from the sensor 141 that acquires information that indicates the speed and the position of the vehicle 1.

The storage unit 152 includes at least one semiconductor memory, at least one magnetic memory, at least one optical memory, or any combination of these. The semiconductor memory is a random access memory (RAM), a read only memory (ROM), or a flash memory, for example. The storage unit 152 stores the state of the vehicle 1.

The control unit 153 may be constituted of dedicated hardware specialized for specific processing, such as an application specific integrated circuit (ASIC) or a field-programmable gate array (FPGA), may be constituted of one or more processors, or may be configured to include both. The control unit 153 executes processing related to the operation of the control device 15 while controlling each part of the control device 15.

The control unit 153 acquires the state of the vehicle 1 detected by the detection unit 14 from the storage unit 152, and outputs control information for controlling the directivity of the antenna 11 to the output unit 154 based on the state of the vehicle 1. When the antenna 11 is composed of a plurality of antennas, for example, the control information includes information indicating the phase and the amplitude of radio waves radiated from each antenna, and information indicating the azimuth angle and elevation angle of each antenna. The process of controlling the directivity of the antenna 11 includes controlling the antenna 11 in the front and rear directions, all planar directions, or all directions, for example.

The output unit 154 outputs the control information generated by the control unit 153 to the antenna 11.

An example of a process in which the control unit 153 controls the directivity of the antenna 11 based on the state of the vehicle 1 will be described below. When the state of the vehicle 1 is being stationary (excluding being stationary in a multilevel parking garage and being charged), there is a high possibility that a different vehicle is present in all planar directions of the vehicle 1 around the vehicle 1. Therefore, the control unit 153 controls the antenna 11 in all planar directions. That is, the control unit 153 controls the antenna 11 such that the directivity is strengthened in planar directions (horizontal directions). The term "around" refers to an area in which vehicle-to-vehicle communication with the vehicle 1 is possible, for example. When the state of the vehicle 1 is being stationary in a multilevel parking garage, there is a high possibility that a different vehicle 1 is present in all directions, including above and below the vehicle 1, around the vehicle 1. Therefore, the control unit 153 controls the antenna 11 in all directions. That is, the control unit 153 controls the antenna 11 in all directions so as not to have a strong directivity in a specific direction. When the state of the vehicle 1 is traveling on a highway, there is a high possibility that a different vehicle 1 is present in the front and rear directions of the vehicle 1 around the vehicle 1. Therefore, the control unit 153 controls the antenna 11 in the front and rear directions. That is, the control unit 153 controls the antenna 11 so as to have a strong directivity in the front and rear directions of the vehicle 1. When the state of the vehicle 1 is being charged, there is a high possibility that a different vehicle 1 is present in the front and rear directions around the vehicle 1. Therefore, the control unit 153 controls the antenna 11 in the front and rear directions. The control direction of the directivity of the antenna 11 may be changed according to the arrangement direction of charging stations (charging stands). That is, when the charging stations are arranged side by side, the control unit 153 may control the antenna 11 in the right-left direction.

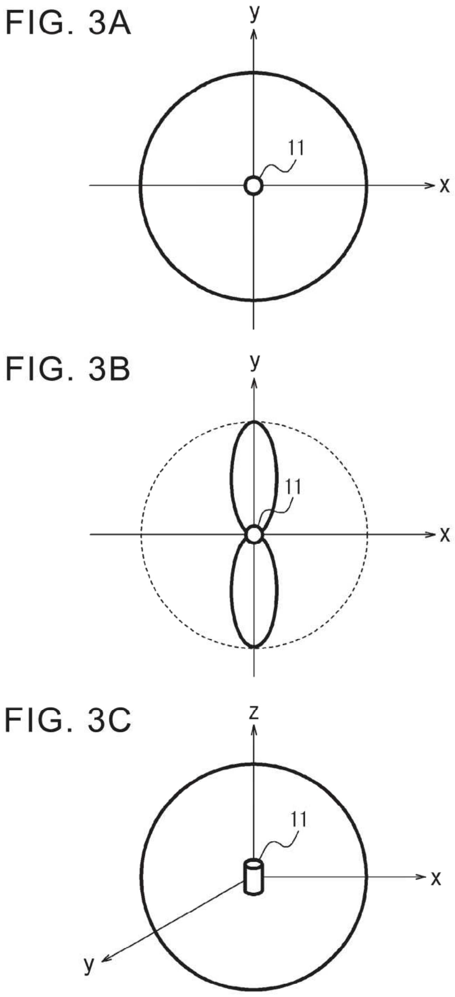

FIGS. 3A, 3B, and 3C each illustrate an example of the directivity of the antenna 11. FIG. 3A is a schematic diagram illustrating an example of directivity when the antenna 11 is controlled in all planar directions. FIG. 3B is a schematic diagram illustrating an example of directivity when the antenna 11 is controlled in the front and rear directions. FIGS. 3A and 3B illustrate the antenna 11 as viewed from above. In FIG. 3B, the direction of the y axis corresponds to the advancing direction of the vehicle 1. FIG. 3C is a schematic diagram illustrating an example of directivity when the antenna 11 is controlled in all directions.

Next, an example of a control method by which the control unit 153 controls the directivity of the antenna 11 will be described below. The control unit 153 may control the directivity of the antenna 11 by combining the control methods described below. When the antenna 11 is composed of a first antenna for the multimedia device 13 and a second antenna for the in-vehicle communication device 12, the control unit 153 controls the directivity of the antenna 11 by switching between the first antenna and the second antenna. The first antenna and the second antenna are switched by an antenna changeover switch, for example, and only the selected first antenna or second antenna radiates radio waves. When the antenna 11 is composed of N antennas 11, i.e., a first antenna to an N-th antenna, with different directivities and gains, the control unit 153 controls the directivity of the antenna 11 by switching among the first antenna to the N-th antenna. The first to N-th antennas are switched by an antenna changeover switch, for example, and only one or more antennas selected from the first to N-th antennas radiate radio waves. When the antenna 11 is composed of N antennas, i.e., a first antenna to an N-th antenna, the control unit 153 controls the directivity of the antenna 11 by controlling the phase of the radio waves from each of the first antenna to the N-th antenna. When the antenna 11 is a liquid metal antenna, the control unit 153 controls the directivity of the liquid metal antenna 11 by controlling at least one of the magnetic field and the amount of heat to be applied to the liquid metal antenna 11.

### Operation Example of Information Processing System

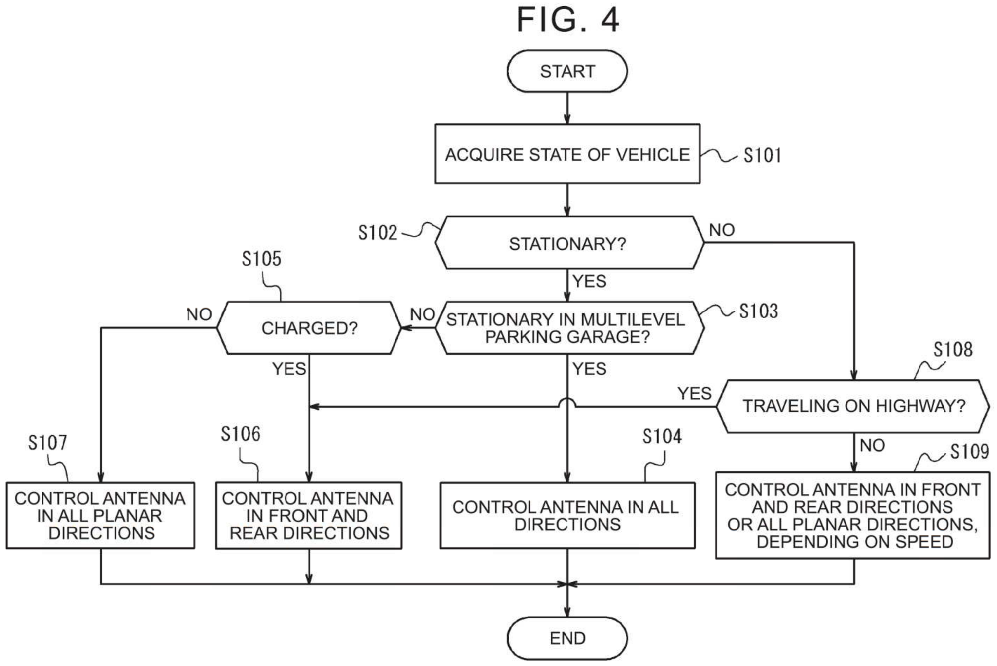

Next, the operation of the control device 15 according to the embodiment will be described with reference to FIG. 4.

In S101, in the control device 15, the control unit 153 acquires the state of the vehicle 1 from the detection unit 14. In the present embodiment, the state of the vehicle 1 is one of "being stationary in a multilevel parking garage", "being stationary (excluding being stationary in a multilevel parking garage and being charged)", "being charged", "traveling on a highway", and "traveling on a road other than a highway".

In S102, the control unit 153 determines whether the vehicle 1 is stationary. When the vehicle 1 is stationary, the control unit 153 advances the process to S103. When the vehicle 1 is not stationary, the control unit 153 advances the process to S108.

In S103, the control unit 153 determines whether the state of the vehicle 1 is "being stationary in a multilevel parking garage". When the state of the vehicle 1 is "being stationary in a multilevel parking garage", the control unit 153 advances the process to S104. When the state of the vehicle 1 is not "being stationary in a multilevel parking garage", the control unit 153 advances the process to S105.

In S104, the control unit 153 controls the antenna 11 in all directions.

In S105, the control unit 153 advances the process to S106 when the state of the vehicle 1 is "being charged", and the control unit 153 advances the process to S107 when the state of the vehicle 1 is not "being charged", i.e., when the state of the vehicle 1 is "being stationary (excluding being stationary in a multilevel parking garage and being charged)".

In S106, the control unit 153 controls the antenna 11 in the front and rear directions.

In S107, the control unit 153 controls the antenna 11 in all planar directions.

In S108, the control unit 153 determines whether the state of the vehicle 1 is "traveling on a highway". When the state of the vehicle 1 is "traveling on a highway", the control unit 153 advances the process to S106. When the state of the vehicle 1 is not "traveling on a highway", that is, when the state of the vehicle 1 is "traveling on a road other than a highway", the process proceeds to S109.

In S109 , the control unit 153 controls the antenna 11 in the front and rear directions or in all planar directions, depending on the speed of the vehicle 1. When the speed of the vehicle 1 is more than a predetermined threshold value Th, the control unit 153 controls the antenna 11 in the front and rear directions, as in S106. When the speed of the vehicle 1 is equal to or less than the predetermined threshold value Th, the control unit 153 controls the antenna in all planar directions, as in S107.

As described above, the control device 15 according to the present embodiment controls the directivity of the antenna 11 using the control unit 153 according to the state of the vehicle 1. Therefore, according to the present disclosure, it is possible to more appropriately control the directivity of the in-vehicle antenna 11.

In another embodiment, a target vehicle 1 equipped with the antenna 11 to be controlled may perform vehicle-to-vehicle communication with a different vehicle 1 and periodically receive position information on the different vehicle 1 from the different vehicle 1. The control device 15 may then control the directivity of the antenna 11 in all planar directions, the front and rear directions, or all directions, as described above, based on the relative positional relationship between the target vehicle 1 and the different vehicle using the control unit 153. For example, the directivity of the antenna 11 is controlled in the front and rear directions when there is a different vehicle 1 close to the target vehicle 1 in the front and rear directions, and the directivity of the antenna 11 is controlled in all planar directions when there is a different vehicle 1 close to the target vehicle 1 in the front, rear, right, and left directions.

### Program

A computer capable of executing program instructions may also be used to function as the control device 15 described above. The program can cause a computer to function as the control device 15 by causing the computer to execute the operation described above.

The program can be stored in a non-transitory computer-readable medium. The non-transitory computer-readable medium is a flash memory, a magnetic recording device, an optical disc, a magneto-optical recording medium, or a ROM, for example. The program is distributed by selling, transferring, or renting a portable medium such as a secure digital (SD) card, a digital versatile disc (DVD), or a compact disc read only memory (CD-ROM) in which the program is stored, for example. The program may be distributed by storing the program in a storage of a server and transferring the program from the server to other computers. The program may be provided as a program product.

The computer temporarily stores, in the storage unit 152, a program stored in a portable medium or a program transferred from a server, for example. The computer then reads the program stored in the storage unit 152 using a processor (e.g., the control unit 153), and causes the processor to execute processing according to the read program. The processor may be a central processing unit (CPU), a micro processing unit (MPU), a system on a chip (SoC), etc., and may be composed of a plurality of processors of the same or different types.

The computer may read the program directly from the portable medium and execute the processing according to the program. The computer may execute the processing according to the received program each time the program is transferred from the server to the computer. The processing may be executed by a so-called application service provider (ASP) type service, which implements functions only by issuing execution instructions and acquiring results, without transferring a program from a server to a computer. The program includes information that is to be processed by an electronic computer and that is equivalent to a program. For example, data that is not a direct command for a computer but has the property of defining the processing by the computer corresponds to the "information that is equivalent to a program".

Although the above embodiment has been described as a typical example, various modifications and changes may be made without departing from the spirit and scope of the present disclosure. For example, it is possible to combine a plurality of component blocks or process steps described in the embodiment into one, or to divide one component block or process step into plural ones.

Some embodiments of the present disclosure will be described below. However, it should be noted that embodiments of the present disclosure are not limited to these.
Appendix 1
   A control device including a control unit that: receives a state of a vehicle from a sensor that acquires information that indicates a speed and a position of the vehicle; and controls a directivity of an antenna provided in the vehicle based on the state of the vehicle.
Appendix 2
   A control device including a control unit that: acquires a state of a vehicle; and controls a directivity of an antenna provided in the vehicle based on the state of the vehicle.
Appendix 3
   The control device according to appendix 1 or 2, in which the state of the vehicle is at least one of being stationary, being stationary in a multilevel parking garage, traveling on a highway, and being charged.
Appendix 4
   The control device according to any one of appendices 1 to 3, in which the controlling of the directivity of the antenna includes controlling the antenna in front and rear directions, all planar directions, or all directions.
Appendix 5
   The control device according to any one of appendices 1 to 4, in which the controlling of the directivity of the antenna includes controlling the antenna in all planar directions when the state of the vehicle is being stationary.
Appendix 6
   The control device according to any one of appendices 1 to 5, in which the controlling of the directivity of the antenna includes controlling the antenna in all directions when the state of the vehicle is being stationary in a multilevel parking garage.
Appendix 7
   The control device according to any one of appendices 1 to 6, in which the controlling of the directivity of the antenna includes controlling the antenna in front and rear directions when the state of the vehicle is traveling on a highway.
Appendix 8
   The control device according to any one of appendices 1 to 7, in which the controlling of the directivity of the antenna includes controlling the antenna in front and rear directions when the state of the vehicle is being charged.
Appendix 9
   The control device according to any one of appendices 1 to 8, in which the controlling of the directivity of the antenna includes switching between a plurality of antennas with different directivities and gains.
Appendix 10
   The control device according to any one of appendices 1 to 9, in which the controlling of the directivity of the antenna includes switching between the antenna for a multimedia device and the antenna for an in-vehicle communication device.
Appendix 11
   The control device according to any one of appendices 1 to 10, in which the controlling of the directivity of the antenna includes controlling a phase of radio waves of a plurality of antennas.
Appendix 12
   The control device according to any one of appendices 1 to 11, in which: the antenna is a liquid metal antenna; and the controlling of the directivity of the antenna includes controlling at least one of a magnetic field and an amount of heat to be applied to the liquid metal antenna.
Appendix 13
   A control method including a control device acquiring a state of a vehicle; and controlling a directivity of an antenna provided in the vehicle based on the state.
Appendix 14
   The control method according to appendix 13, in which the state of the vehicle is at least one of being stationary, being stationary in a multilevel parking garage, traveling on a highway, and being charged.
Appendix 15
   The control method according to appendix 13 or 14, in which the controlling of the directivity of the antenna includes controlling the antenna in front and rear directions, all planar directions, or all directions.
Appendix 16
   The control method according to any one of appendices 13 to 15, in which the controlling of the directivity of the antenna includes controlling the antenna in all planar directions when the state of the vehicle is being stationary.
Appendix 17
   The control method according to any one of appendices 13 to 16, in which the controlling of the directivity of the antenna includes controlling the antenna in all directions when the state of the vehicle is being stationary in a multilevel parking garage.
Appendix 18
   The control method according to any one of appendices 13 to 17, in which the controlling of the directivity of the antenna includes controlling the antenna in front and rear directions when the state of the vehicle is traveling on a highway.
Appendix 19
   The control method according to any one of appendices 13 to 18, in which the controlling of the directivity of the antenna includes controlling the antenna in front and rear directions when the state of the vehicle is being charged.
Appendix 20
   A vehicle including: an antenna; a detection unit that detects a state of the vehicle; and a control unit that acquires the state of the vehicle and controls a directivity of the antenna based on the state of the vehicle.

## Claims

1. A control device (15) comprising a control unit (153) configured to execute:
receiving a state of a vehicle (1) from a sensor (141) configured to acquire information that indicates a speed and a position of the vehicle (1); and
controlling a directivity of an antenna (11) provided in the vehicle (1) based on the state of the vehicle (1).

2. A control device (15) comprising a control unit (153) configured to execute:
acquiring a state of a vehicle (1); and
controlling a directivity of an antenna (11) provided in the vehicle (1) based on the state of the vehicle (1).

3. The control device (15) according to claim 2, wherein the state of the vehicle (1) is at least one of being stationary, being stationary in a multilevel parking garage, traveling on a highway, and being charged.

4. The control device (15) according to claim 2, wherein the controlling the directivity of the antenna (11) includes controlling the antenna (11) in front and rear directions, all planar directions, or all directions.

5. The control device (15) according to claim 2, wherein the controlling the directivity of the antenna (11) includes controlling the antenna (11) in all planar directions when the state of the vehicle (1) is being stationary.

6. The control device (15) according to claim 2, wherein the controlling the directivity of the antenna (11) includes controlling the antenna (11) in all directions when the state of the vehicle (1) is being stationary in a multilevel parking garage.

7. The control device (15) according to claim 2, wherein the controlling the directivity of the antenna (11) includes controlling the antenna (11) in front and rear directions when the state of the vehicle (1) is traveling on a highway.

8. The control device (15) according to claim 2, wherein the controlling the directivity of the antenna (11) includes controlling the antenna (11) in front and rear directions when the state of the vehicle (1) is being charged.

9. The control device (15) according to claim 2, wherein the controlling the directivity of the antenna (11) includes switching between a plurality of antennas (11) with different directivities and gains.

10. The control device (15) according to claim 2, wherein the controlling the directivity of the antenna (11) includes switching between the antenna (11) for a multimedia device (13) and the antenna (11) for an in-vehicle communication device (12).

11. The control device (15) according to claim 2, wherein the controlling the directivity of the antenna (11) includes controlling a phase of radio waves of a plurality of antennas (11).

12. The control device (15) according to claim 2, wherein:
the antenna (11) is a liquid metal antenna; and
the controlling the directivity of the antenna (11) includes controlling at least one of a magnetic field and an amount of heat to be applied to the liquid metal antenna (11).

13. A control method comprising:
acquiring, by a control device (15), a state of a vehicle (1); and
controlling, by the control device (15), a directivity of an antenna (11) provided in the vehicle (1) based on the state.

14. The control method according to claim 13, wherein the state of the vehicle (1) is at least one of being stationary, being stationary in a multilevel parking garage, traveling on a highway, and being charged.

15. A vehicle (1) comprising:
an antenna (11);
a detection unit (14) configured to detect a state of the vehicle (1); and
a control unit (153) configured to acquire the state of the vehicle (1) and control a directivity of the antenna (11) based on the state of the vehicle (1).
